# EUROPEAN PATENT APPLICATION

(11) **EP 3 952 550 A1**
(43) Date of publication of application: **09.02.2022**
(21) Application number: 19921488.3
(22) Date of filing: 28.03.2019
(51) Int. Cl.: H04W 72/08, H04W 16/14, H04W 74/08

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: MURAYAMA, Daisuke, Tokyo 100-6150 (JP); HARADA, Hiroki, Tokyo 100-6150 (JP)
(74) Representative: Hoffmann Eitle
(86) International application number: PCT/JP2019/013883
(87) International publication number: WO 2020/194749

(57) **Abstract**

A user terminal includes: a receiving section that receives a downlink signal at start of a transmission opportunity in frequency to which sensing of a channel is applied; and a control section that transmits a specific signal based on a time length of the transmission opportunity in response to reception of the downlink signal. According to an aspect of the present disclosure, appropriate communication can be performed in an unlicensed band.

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G plus (+)," "New Radio (NR)," "3GPP Rel. 15 (or later versions)," and so on) are also under study.

In an existing LTE system (for example, Rel. 8 to Rel. 12), specifications have been made on the assumption that exclusive operation is carried out in a frequency band (also referred to as a licensed band, a licensed carrier, a licensed component carrier (licensed CC), or the like) that is licensed to a communication operator. As the licensed CC, for example, 800 MHz, 1.7 GHz, 2 GHz, or the like is used.

In the existing LTE system (for example, Rel. 13), the frequency band is extended, and thus the use of a frequency band (also referred to as an unlicensed band, an unlicensed carrier, or an unlicensed CC) that is different from the above-described licensed band is supported. As the unlicensed band, for example, a 2.4 GHz band, a 5 GHz band, or the like in which Wi-Fi (registered trademark) and Bluetooth (registered trademark) can be used is assumed.

Specifically, in Rel. 13, carrier aggregation (CA), whereby a carrier (CC) of the licensed band and a carrier (CC) of the unlicensed band are aggregated, is supported. Communication performed with the use of the unlicensed band as well as the licensed band as described above is referred to as License-Assisted Access (LAA).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, 5G, 5G+, NR, or Rel. 15 or later versions), a transmitting apparatus (for example, a base station in the downlink (DL), and a user terminal in the uplink (UL)) performs listening for confirming whether or not there is transmission of another apparatus (for example, a base station, a user terminal, a Wi-Fi apparatus, or the like), before transmission of data in the unlicensed band.

In order that such radio communication systems as above coexist with another system in the unlicensed band, it is conceivable to follow regulations or requirements in the unlicensed band.

However, unless operation in the unlicensed band is clearly determined, appropriate communication may not be able to be performed in the unlicensed band; specifically, operation in a specific communication situation does not conform to the regulations, and use efficiency of radio resources is reduced, for example.

In the light of this, the present disclosure has an object to provide a user terminal and a radio communication method that perform appropriate communication in an unlicensed band.

### Solution to Problem

A user terminal according to an aspect of the present disclosure includes: a receiving section that receives a downlink signal at start of a transmission opportunity in frequency to which sensing of a channel is applied; and a control section that transmits a specific signal based on a time length of the transmission opportunity in response to reception of the downlink signal.

### Advantageous Effects of Invention

According to an aspect of the present disclosure, appropriate communication can be performed in the unlicensed band.

### Brief Description of Drawings

FIG. 1 is a diagram to show an example of CSMA/CA with ACK;
FIG. 2 is a diagram to show an example of collision of pieces of data caused by a hidden terminal;
FIG. 3 is a diagram to show an example of CSMA/CA with RTS/CTS;
FIG. 4 is a diagram to show an example of RTS/CTS in an NR-U system;
FIG. 5 is a diagram to show an example of a method of determining an SRS sequence identifier;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a functional structure of the user terminal according to one embodiment; and
FIG. 9 is a diagram to show an example of a hardware structure of the base station and the user terminal according to one embodiment.

### Description of Embodiments

### <Collision Avoidance Method in Unlicensed Band>

In an unlicensed band (for example, a 2.4 GHz band and a 5 GHz band), for example, it is assumed that a plurality of systems, such as a Wi-Fi system and a system supporting LAA (LAA system), coexist, and thus it is considered that collision (contention) avoidance and/or interference control of transmission among the plurality of systems is required.

An NR system (for example, also referred to as 5G, 5G+, NR, 3GPP Rel. 15 or later versions, or the like) using the unlicensed band may be referred to as an NR-Unlicensed (U) system, an NR LAA system, or the like. Dual connectivity (DC) between the licensed band and the unlicensed band, stand-alone (SA) of the unlicensed band, or the like may also be adopted in NR-U.

For example, in the Wi-Fi system using the unlicensed band, Carrier Sense Multiple Access (CSMA)/Collision Avoidance (CA) is adopted with the aim of collision avoidance and/or interference control.

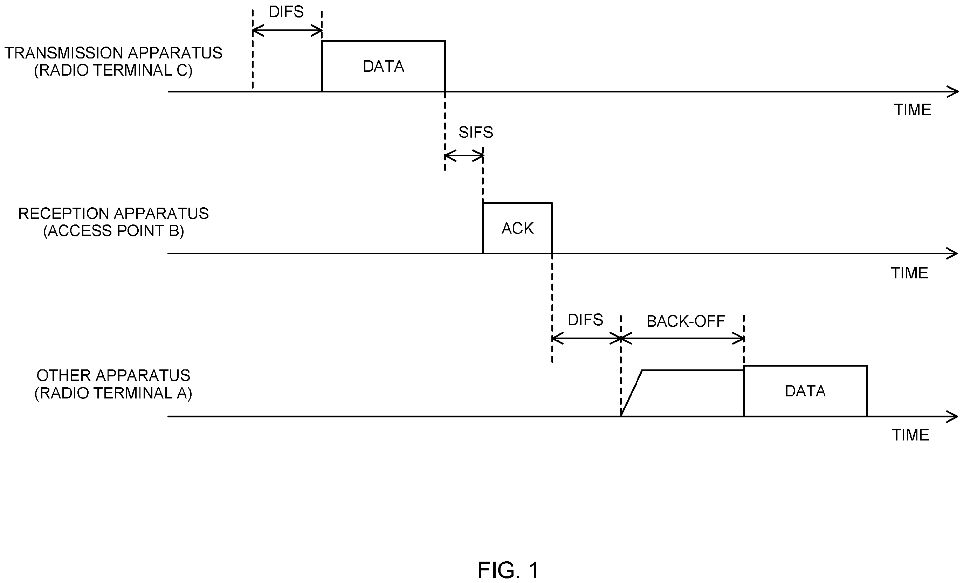

FIG. 1 is a diagram to show an example of CSMA/CA. As shown in FIG. 1, a radio terminal C (data transmission side) examines a signal on a communication medium (carrier sense). Even if the radio terminal C determines that there is no signal, the radio terminal C does not start data transmission immediately, but waits for a certain time period and then transmits the data. The waiting time period is referred to as a Distributed access Inter Frame Space (DIFS). An access point B (data reception side) that has received the data returns a positive response (Acknowledgement (ACK)). It is arranged that the ACK be able to be transmitted preferentially, and thus the ACK can be transmitted after waiting for only a time period (SIFS (Short IFS)) that is shorter than the DIFS. The radio terminal C (data transmission side) repeats retransmission until the ACK is received. Thus, an access scheme (first access scheme) shown in FIG. 1 is also referred to as CSMA/CA with ACK.

With the aim of collision avoidance and/or interference control, the Wi-Fi system adopts Request to Send (RTS)/Clear to Send (CTS), whereby a transmission request (RTS) is transmitted before transmission, and if a receiving apparatus is capable of reception, a response is made with reception being possible (CTS). For example, RTS/CTS is effective for avoidance of collision of pieces of data caused by a hidden terminal.

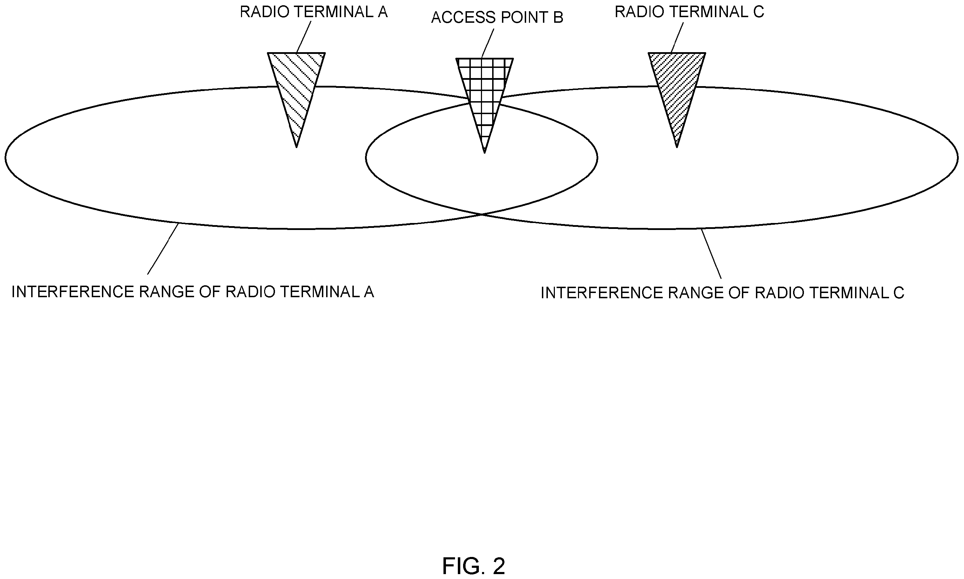

FIG. 2 is a diagram to show an example of collision of pieces of data caused by a hidden terminal. In FIG. 2, radio waves of the radio terminal C do not reach a radio terminal A, and thus the radio terminal A cannot detect a transmission signal from the radio terminal C even if the radio terminal A performs carrier sense before transmission. As a result, it is assumed that, even during the transmission to the access point B by the radio terminal C, the radio terminal A also performs transmission to the access point B. In this case, in the access point B, transmission signals from the radio terminals A and C may collide with each other, causing deterioration in throughput.

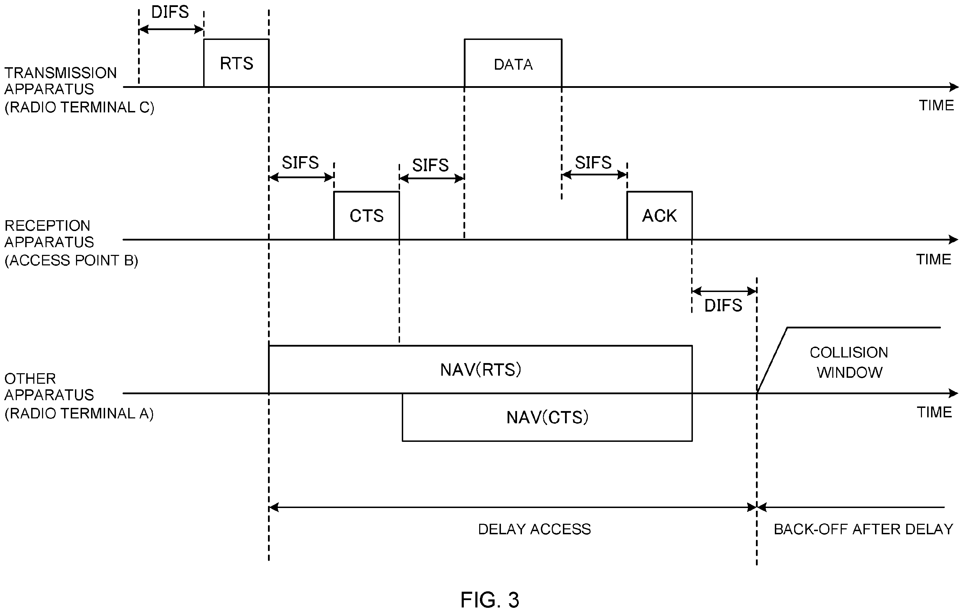

FIG. 3 is a diagram to show an example of CSMA/CA with RTS/CTS. As shown in FIG. 2, when the radio terminal C (transmission side) confirms that there are no other transmission signals (idle) through carrier sense in a certain time period (DIFS) before transmission, the radio terminal C transmits RTS (note that, in FIG. 1, the RTS does not reach the radio terminal A (another terminal)). It is preferable that RTS be omni (nondirectional)-transmission. RTS may be subjected to beamforming. When the access point B (reception side) receives RTS from the radio terminal C, and then confirms that there are no other transmission signals (idle, clear) through carrier sense in a certain time period (Short Inter Frame Space (SIFS)), the access point B transmits CTS. It is preferable that CTS be omni-transmission. RTS may be referred to as a transmission request signal. CTS may be referred to as a receivable signal.

In FIG. 3, CTS from the access point B also reaches the radio terminal A (another apparatus), and thus the radio terminal A assumes that communication is performed, and postpones transmission. A certain period (also referred to as a Network Allocation Vector (NAV), a transmission prohibition period, or the like) is described in packets of RTS/CTS, and thus communication is deferred during the certain period (NAV indicated in RTS "NAV (RTS)", NAV indicated in CTS "NAV (CTS)").

When the radio terminal C that has received CTS from the access point B confirms that there are no other transmission signals (idle) through carrier sense in the certain period (SIFS) before transmission, the radio terminal C transmits data (frame). The access point B that has received the data transmits an ACK after the certain period (SIFS).

In FIG. 3, when the radio terminal A, which is a hidden terminal of the radio terminal C, detects CTS from the access point B, the radio terminal A postpones transmission, and thus collision of the transmission signals of the radio terminals A and C in the access point B can be avoided.

In LAA of the existing LTE system (for example, Rel. 13), a transmitting apparatus of data performs listening (also referred to as LBT, CCA, carrier sense, channel access operation, or the like) for confirming whether or not there is transmission of another apparatus (for example, a base station, a user terminal, a Wi-Fi apparatus, or the like), before transmission of data in the unlicensed band.

The transmitting apparatus may be, for example, a base station (for example, a gNodeB, a (gNB), a transmission/reception point (TRP), or a network (NW)) in the downlink (DL), and a user terminal (for example, a User Equipment (UE)) in the uplink (UL). The receiving apparatus that receives data from the transmitting apparatus may be, for example, a user terminal in the DL, and a base station in the UL.

In LAA of the existing LTE system, the transmitting apparatus starts data transmission after a certain period (for example, immediately after or a period of back-off) after it is detected that there is no transmission of another apparatus (idle state) through listening, whereas the transmitting apparatus does not perform data transmission if it is detected that there is transmission of another apparatus (busy state) through listening. However, even when the transmitting apparatus transmits data based on results of the listening, collision of pieces of data in the receiving apparatus may not be able to be avoided due to the presence of the hidden terminal.

Thus, in the NR-U system, supporting RTS/CTS described above has been under study with the aim of enhancing an avoidance rate of collision of pieces of data in the receiving apparatus.

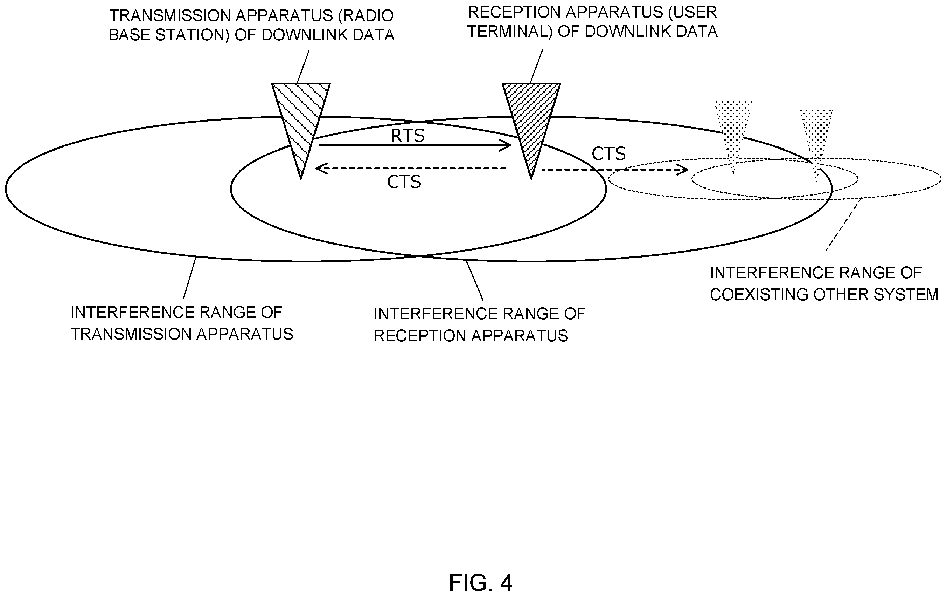

FIG. 4 is a diagram to show an example of RTS/CTS in the NR-U system. In the NR-U system supporting RTS/CTS, it is assumed that the transmitting apparatus (base station) transmits RTS in a carrier of the unlicensed band (also referred to as an unlicensed carrier, an unlicensed CC, an LAA SCell (Secondary Cell), or the like) before transmission of downlink data to the receiving apparatus (user terminal).

When an uplink unlicensed CC is supported in the NR-U system as described above, as shown in FIG. 4, it is conceivable that the receiving apparatus (user terminal) of downlink data transmits CTS by using the uplink unlicensed CC. Instead of the uplink unlicensed CC, an unlicensed CC of TDD (Time Division Duplex, unpaired spectrum) may be used.

When the LBT results indicate idle (LBT-idle), a node (for example, the base station (for example, the gNB), or the UE) in NR-U obtains a transmission opportunity (TxOP, channel occupancy) and thereby performs transmission, whereas when the LBT results indicate busy (LBT-busy), the node does not perform transmission. Time of the transmission opportunity is referred to as Channel Occupancy Time (COT).

The COT is a total time length of all of the transmissions in the transmission opportunity and gaps in a certain time period, and may be maximum COT (MCOT) or less. The MCOT may be determined based on a channel access priority class. The channel access priority class may be associated with a contention window size.

The base station that has obtained the MCOT through LBT may perform scheduling for one or more UEs in the period of the MCOT.

The NR-U system may perform operation of carrier aggregation (CA) using the unlicensed CC and the licensed CC, may perform operation of dual connectivity (DC) using the unlicensed CC and the licensed CC, and may perform operation of stand-alone (SA) using only the unlicensed CC. CA, DC, or SA may be performed by any one system out of NR and LTE. DC may be performed by at least two out of NR, LTE, and another system.

UL transmission in the unlicensed CC may be at least one of a PUSCH, a PUCCH, and an SRS.

The node may perform LBT in LTE LAA or receiver assisted LBT as LBT (initial LBT, initial-LBT (I-LBT)) for obtaining the COT. LBT of LTE LAA in this case may be category 4.

The UE may assume the presence of a signal (for example, a Reference Signal (RS) such as a Demodulation Reference Signal (DMRS)) in a PDCCH or a group common-PDCCH (GC-PDCCH) for detecting a transmission burst from a serving base station. The PDCCH may be a PDCCH for one UE (UE specific PDCCH, regular PDCCH). The GC-PDCCH may be a common PDCCH for one or more UEs (UE group common-PDCCH).

The base station may transmit a specific PDCCH (PDCCH or GC-PDCCH) including a specific DMRS for reporting COT start, at the time of the COT start triggered by the base station. At least one of the specific PDCCH and the specific DMRS may be referred to as a COT start report signal. Regarding the base station, the COT start report signal may be transmitted to one or more specific UEs.

When the UE detects a specific DMRS, the UE may recognize the COT.

The base station may schedule UL transmission in the COT of the UE by using the specific PDCCH. The UL transmission in the COT is referred to as a scheduled specific UE. The specific UE may be a UE in which transmission of a UL signal in the COT (for example, the first UL signal in the COT) is scheduled.

In NR-U, a handshake procedure between a transmitter and a receiver has been under study. The following scheme has been under study: the handshake procedure between the base station and the UE is implemented, with the UE specified by the specific PDCCH transmitting a specific UL signal (response signal) such as an SRS after LBT.

As described above, in NR-U, an access scheme that is close to CSMA/CA with RTS/CTS (receiver assisted access (RAA), a handshake procedure, an access scheme using RTS/CTS, a second access scheme) has been under study, which is achieved by using the specific PDCCH (COT start report signal) as the transmission request signal (RTS) and using the response signal triggered by the specific PDCCH as a receivable state report signal (CTS).

However, even when the specific UE transmits the response signal, a neighboring node may perform transmission in the COT, and the specific UE may thus receive interference from a hidden terminal during reception operation in the COT.

In the light of this, the inventors of the present invention came up with the idea of transmitting a specific signal based on a time length (for example, an MCOT length) of a transmission opportunity (for example, COT) in response to reception of a downlink signal (for example, a specific PDCCH (PDCCH or GC-PDCCH), or a COT start report signal) at the start of the transmission opportunity in the unlicensed band.

With this configuration, the probability of arrival of interference waves from a hidden terminal during a reception operation can be reduced, and radio resource use efficiency can be enhanced. Carrier sense operation frequency of a neighboring node can be reduced, and therefore power consumption of the neighboring node can be reduced.

Embodiments according to the present disclosure will be described below in detail with reference to the drawings. A radio communication method according to each embodiment may be employed independently or may be employed in combination.

In the present disclosure, a node, a UE, a base station, a radio communication apparatus, and a device may be interchangeably interpreted.

In the present disclosure, listening, Listen Before Talk (LBT), Clear Channel Assessment (CCA), carrier sense, sensing of a channel, or channel access operation (channel access procedure) may be interchangeably interpreted.

In the present disclosure, frequency, a band, a spectrum, a carrier, a component carrier (CC), and a cell may be interchangeably interpreted.

In the present disclosure, a frequency for NR-U, an unlicensed band, an unlicensed spectrum, an unlicensed CC, an LAA SCell, an LAA cell, a primary cell (PCell, a Primary Secondary Cell (PSCell), a Special Cell (SpCell)), a secondary cell (SCell), and a frequency to which sensing of a channel is applied may be interchangeably interpreted.

In the present disclosure, a frequency for NR, a licensed band, a licensed spectrum, a licensed CC, a PCell, a PSCell, an SpCell, an SCell, a frequency for non-NR-U, Rel. 15, NR, and a frequency to which sensing of a channel is not applied may be interchangeably interpreted.

In the frequency for NR-U and the frequency for NR, different frame structures may be used.

A radio communication system (NR-U, LAA system) may conform to a first radio communication standard (for example, NR, LTE, or the like) (support the first radio communication standard).

Another system (coexisting system, coexisting apparatus) that coexists with the radio communication system and another radio communication apparatus (coexisting apparatus) may conform to a second radio communication standard that is different from the first radio communication standard (support the second radio communication standard), examples of the second radio communication standard including Wi-Fi, Bluetooth (registered trademark), WiGig (registered trademark), a radio LAN (Local Area Network), IEEE802.11, an LPWA (Low Power Wide Area), and LTE LAA, or may conform to the first radio communication standard by being managed by another operator. The coexisting system may be a system that receives interference from the radio communication system, or may be a system that gives interference to the radio communication system.

In the present disclosure, an LBT subband, an active BWP part, a subband, and a partial band may be interchangeably interpreted.

### (Radio Communication Method)

### <First Embodiment>

The specific UL signal (specific signal) may indicate the maximum COT (MCOT, the time length of the transmission opportunity, the maximum time length of the transmission opportunity).

When the specific UE receives the COT start report signal (specific PDCCH, downlink signal) that is transmitted at the time of transmission start of the base station, the specific UE may transmit the specific UL signal to thereby report that reception is possible. The specific UL signal may be an RS such as an SRS and a DMRS.

The base station may report information (COT structure, MCOT, channel access priority class, contention window size, or the like) related to the MCOT. The specific PDCCH may carry the information related to the MCOT. The specific UE may determine the MCOT, based on the information related to the MCOT.

The specific UL signal may indicate state information. The state information may include at least one of an MCOT length (time length (duration)), a cell ID, and a Public Land Mobile Network (PLMN) ID. The PLMN ID may be based on identification information of at least one of a network and an operator.

A node other than the specific UE may receive the specific UL signal, and decode the MCOT length from the specific UL signal. A node (for example, the base station, or the UE) that does not perform other signal transmission (in which other signal transmission is not scheduled) in the period of the MCOT reported by the specific UL signal need not perform LBT and signal transmission in the period of the reported MCOT.

With the specific UE reporting the MCOT length to a neighboring node, transmission operation of a neighboring non-scheduled node during the period of the MCOT can be prohibited. With this configuration, interference from a hidden terminal can be reduced, and power consumption of the neighboring node can be reduced.

With the specific UE reporting at least one of a cell ID and a UE ID of the specific UE to a neighboring node, the neighboring node can recognize whether or not the neighboring node is a hidden terminal for a TRP (base station) corresponding to the reported cell ID. With at least one of the NW and each node aggregating (storing) information of at least one of the cell ID and the UE ID of the specific UE being reported, combinations capable of simultaneous transmission among different cells can be estimated. By performing scheduling using the combination, the NW can enhance space use efficiency.

With the specific UE reporting at least one of a PLMN ID and a cell ID to a neighboring node, the neighboring node can recognize whether or not the neighboring node is a hidden terminal for a TRP (base station) corresponding to at least one of the PLMN ID and the cell ID being reported. With at least one of the NW and each node aggregating (storing) information of at least one of the PLMN ID and the cell ID being reported, combinations capable of simultaneous transmission among different cells can be estimated. By performing scheduling using the combination, the NW can enhance space use efficiency.

According to the first embodiment described above, transmission of a neighboring node during the MCOT period can be prohibited, and interference from a hidden terminal can thus be reduced.

### <Second Embodiment>

The specific UE may determine a sequence identifier (identity), generate a sequence based on the sequence identifier, and transmit the specific UL signal by using the sequence.

The specific UE may determine the sequence identifier from a parameter, with the use of association (for example, a table) between the sequence identifier and the parameter. The parameter may include at least the MCOT.

The specific UL signal may be an SRS. An SRS sequence used for the SRS may be a low Peak to Average Power Ratio (low PAPR) sequence. The low PAPR sequence may be a Constant Amplitude Zero Auto Correlation (CAZAC) sequence (for example, a Zadoff-Chu sequence, a computer-generated sequence that is defined in a specification (table), or the like). The sequence identifier may be an SRS sequence identifier (for example, n_{ID}^{SRS}, or sequenceId in an SRS-Config information element (IE)).

The UE may determine a value of the SRS sequence identifier corresponding to the MCOT reported by the COT start report signal, with the use of the association between the MCOT and the SRS sequence identifier. The association may be defined in a specification, or may be reported by higher layer signaling. The specific UE may generate the SRS sequence based on the SRS sequence identifier, in accordance with an SRS generation method in NR.

The parameter may further include at least one of a UE ID, a cell ID, and a PLMN ID. The UE may determine the SRS sequence identifier, with the use of association between at least one of the UE ID, the cell ID, and the PLMN ID, the MCOT, and the SRS sequence identifier.

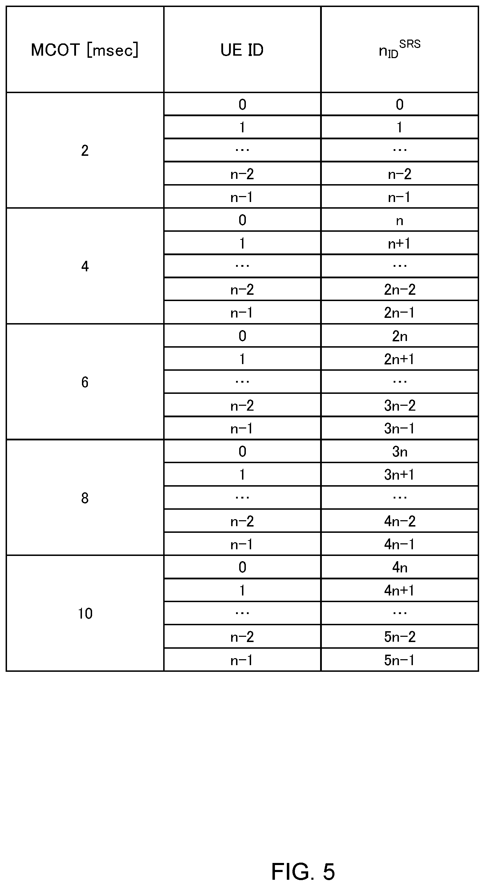

For example, as shown in the table of FIG. 5, association between the MCOT, the UE ID, and the SRS sequence identifier may be defined in a specification, or may be reported using higher layer signaling. The UE may determine the SRS sequence identifier from the MCOT and the UE ID by using the association. The table may not include the column of the UE ID, or may include the column of at least one of the cell ID and the PLMN ID.

The COT start report signal may indicate the SRS sequence identifier. The base station may determine the SRS sequence identifier with the use of the association between the MCOT, at least one of the UE ID, the cell ID, and the PLMN ID, and the SRS sequence identifier, and report the SRS sequence identifier to the specific UE by using the COT start report signal. The specific UE may generate the SRS sequence based on the reported SRS sequence identifier. The specific UE may recognize the MCOT by the SRS sequence identifier indicated by the COT start report signal.

The specific UE may store (for example, generate, buffer) a plurality of specific UL signals corresponding to a plurality of candidates of the MCOT in advance. With this configuration, a time period from reception of the COT start report signal to transmission of the specific UL signal can be reduced shorter than a time period necessary for decoding of the COT start report signal and generation of the specific UL signal.

A node other than the specific UE may identify a sequence used for a received specific UL signal out of a plurality of candidates of the sequence, and recognize a parameter associated with the sequence with the use of the association described above. For the identification of the sequence, maximum likelihood detection, correlation operation, or the like may be used.

According to the second embodiment described above, the MCOT can be reported with the sequence of the specific UL signal.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

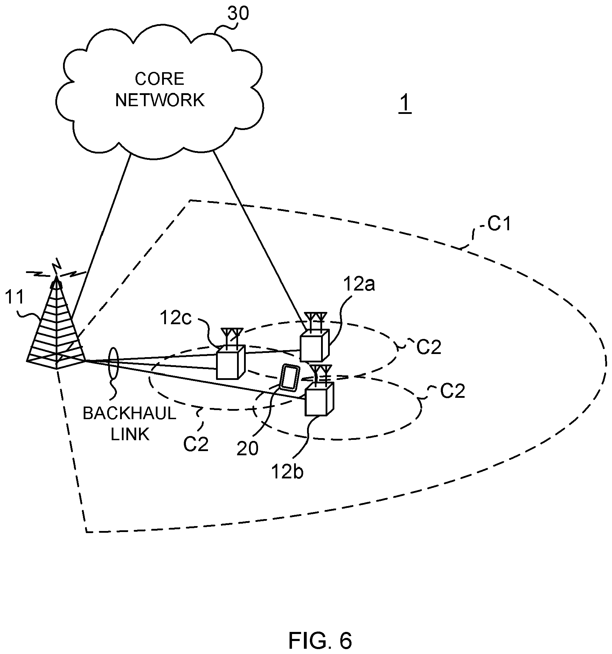

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the

### DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

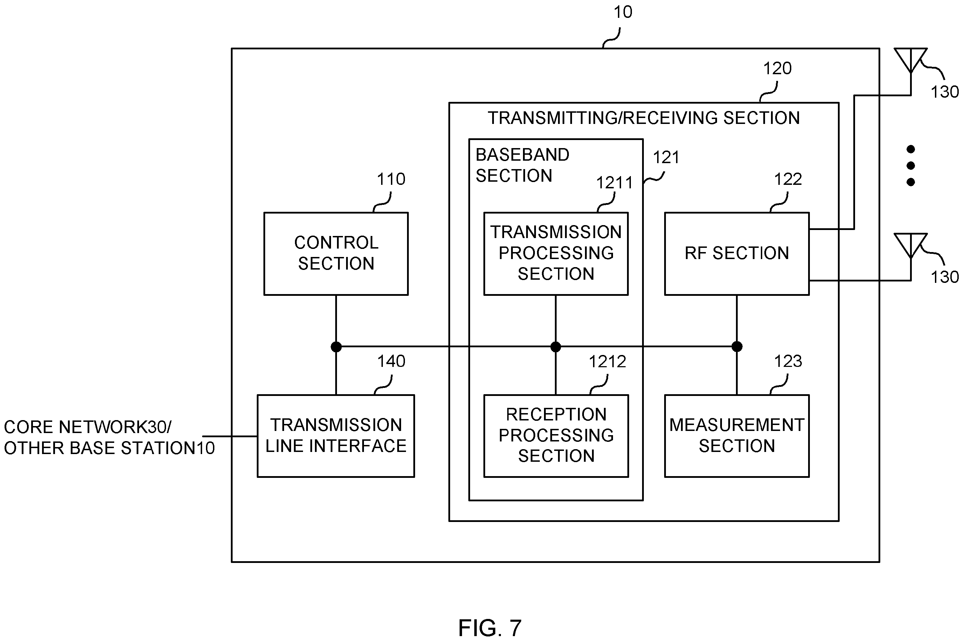

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120 and the transmitting/receiving antennas 130.

### (User Terminal)

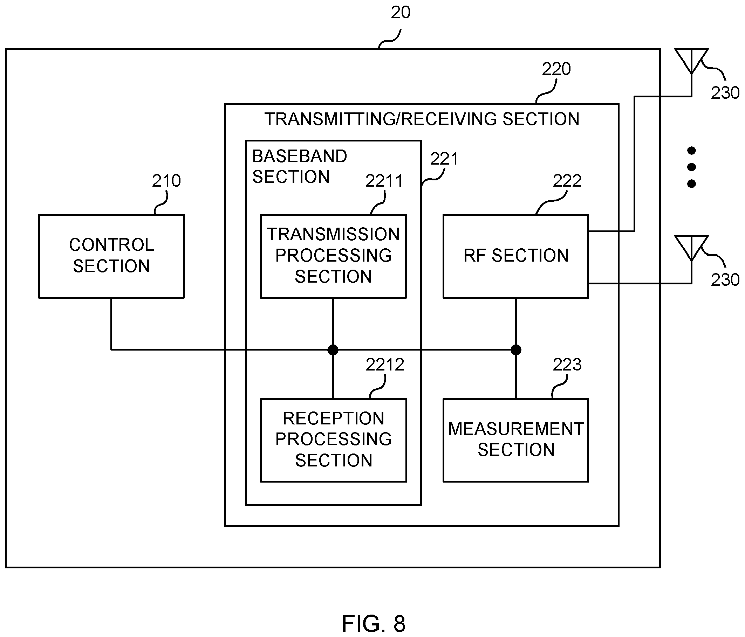

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The control section 210 may receive a downlink signal (for example, a specific PDCCH (PDCCH or GC-PDCCH), or a COT start report signal) at start of a transmission opportunity (for example, COT) in frequency (for example, an unlicensed band) to which sensing of a channel is applied. The control section 210 may transmit a specific signal based on a time length (for example, an MCOT length) of the transmission opportunity in response to reception of the downlink signal.

The specific signal may be based further on at least one of a cell ID, an ID of the user terminal (for example, a UE ID), and a Public Land Mobile Network (PLMN) ID.

The specific signal may be a sounding reference signal (SRS) based on an SRS sequence identifier associated with the time length.

When the control section 210 receives a specific signal from another user terminal, the control section 210 need not perform transmission until the time length indicated by the received specific signal elapses.

The downlink signal may indicate the time length.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

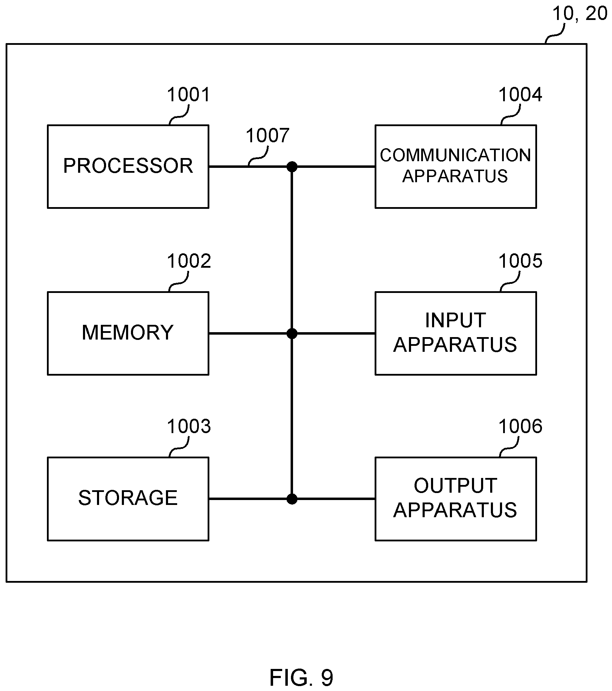

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives a downlink signal at start of a transmission opportunity in frequency to which sensing of a channel is applied; and
a control section that transmits a specific signal based on a time length of the transmission opportunity in response to reception of the downlink signal.

2. The user terminal according to claim 1, wherein the specific signal is based further on at least one of a cell ID, an ID of the user terminal, and a Public Land Mobile Network (PLMN) ID.

3. The user terminal according to claim 1 or 2, wherein the specific signal is a sounding reference signal (SRS) based on an SRS sequence identifier associated with the time length.

4. The user terminal according to any one of claims 1 to 3, wherein when the control section receives a specific signal from another user terminal, the control section does not perform transmission until the time length indicated by the received specific signal elapses.

5. The user terminal according to any one of claims 1 to 4, wherein the downlink signal indicates the time length.

6. A radio communication method for a user terminal, comprising:
receiving a downlink signal at start of a transmission opportunity in frequency to which sensing of a channel is applied; and
transmitting a specific signal based on a time length of the transmission opportunity in response to reception of the downlink signal.
